(19)

Europäisches Patentamt
European Patent Office
Office européen des brevets

(11) **EP 4 554 113 A1**

(12) **DEMANDE DE BREVET EUROPEEN**

(43) Date de publication:
**14.05.2025 Bulletin 2025/20**

(21) Numéro de dépôt: **24211618.4**

(22) Date de dépôt: **08.11.2024**

(51) Classification Internationale des Brevets (IPC):
***H04B 7/185*** (2006.01)

(52) Classification Coopérative des Brevets (CPC):
**H04B 7/185; H04B 7/18515; H04B 2210/006**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **09.11.2023 FR 2312221**

(71) Demandeur: **THALES**
**92190 Meudon (FR)**

(72) Inventeurs:
- **BENAZET, Benoit**
  **31100 TOULOUSE (FR)**
- **SOTOM, Michel**
  **31100 TOULOUSE (FR)**

(74) Mandataire: **Atout PI Laplace**
**Immeuble Up On**
**25 Boulevard Romain Rolland**
**CS 40072**
**75685 Paris Cedex 14 (FR)**

(54) **DISPOSITIF PHOTONIQUE ET PROCÉDÉ DE TRANSMISSION ET/OU DE CONVERSION EN FRÉQUENCE DE SIGNAUX RADIOFRÉQUENCE D'UN SATELLITE DE TÉLÉCOMMUNICATIONS**

(57) Il est proposé un dispositif photonique (10) de transmission de signaux radiofréquence ($S_{En}$) provenant d'au moins une source RF. Le dispositif comprend :
- un générateur de signaux optiques (110) pour générer N signaux optiques ($S_{1n}$),
- N modulateurs optiques de phase (120-n), chacun étant apte à moduler en phase un signal optique ($S_{1n}$) à partir d'un signal RF ($S_{En}$), et adapté pour délivrer un signal optique ($S_{2n}$) modulé en phase,
- un démodulateur (140) adapté pour générer au moins un signal optique ($S_4$, $S_{4n}$) démodulé en phase à partir d'au moins un signal optique ($S_{2n}$), et
- au moins un convertisseur (150) adapté pour convertir chaque signal optique démodulé ($S_4$, $S_{4n}$) en un signal de sortie ($S_5$, $S_{5n}$) défini dans le domaine RF, transmis à au moins une unité de réception, et portant des informations utiles issues d'au moins un des signaux RF ($S_{En}$).

[Fig. 1]

## Description

## Domaine technique

La présente invention concerne de manière générale le domaine spatial, et en particulier un dispositif photonique et un procédé de transmission et/ou de conversion en fréquence de signaux radiofréquence (RF).

Dans les satellites de télécommunications, le nombre d'éléments récepteurs pour les antennes des nouvelles charges utiles et les fréquences de signaux RF d'entrée/sortie ne cessent d'augmenter.

Les éléments récepteurs de telles antennes, comme par exemple les antennes réseau actives, fournissent des signaux radiofréquence qui doivent être transmis et convertis en fréquence.

Or, dans des applications embarquées, la conversion de fréquence et la transmission des signaux radiofréquence des éléments récepteurs d'une antenne réseau active de réception vers un processeur numérique de la charge utile peuvent être complexes.

Par ailleurs, pour des opérations de tests de la charge utile lors de procédures appelées AIT (acronyme pour l'expression anglo-saxonne *Assembly Intégration and Testing)* effectuées au sol, la transmission et/ou la conversion des signaux radiofréquence de la charge utile en environnement sévère (par exemple dans une chambre à vide thermique) vers un équipement de mesure placé à température ambiante peuvent également présenter des difficultés de mise en oeuvre.

Des dispositifs photoniques de transmission et/ou de conversion de signaux radiofréquence (RF) dans des systèmes antennaires ont été proposés, tel que décrit par exemple dans la demande de brevet FR2864385A1. Cependant, de tels dispositifs présentent l'inconvénient d'utiliser des modulateurs électro-optiques d'amplitude utilisant des cartes électroniques ou des circuits électroniques de contrôle de biais pour fonctionner correctement. Par suite, ces solutions sont incompatibles ou très contraignantes pour des applications embarquées ou AIT. En particulier, les cartes/circuits électroniques de contrôle de biais présentent des problèmes de résistance au vide thermique de sorte que l'implémentation de ces solutions est très coûteuse par rapport au nombre de raccordements électriques à installer. Il en résulte une mise en oeuvre complexe, une consommation d'énergie et un poids importants, ainsi qu'une compacité et une fiabilité insuffisantes.

Il existe ainsi un besoin pour un dispositif photonique amélioré permettant de transmettre et/ou de convertir en fréquence efficacement des signaux radiofréquence, particulièrement adaptés à des applications spatiales bord (c'est-à-dire des applications embarquées dans le domaine spatial) ou à des applications de type AIT effectuée au sol.

## Résumé de l'invention

A cet effet, il est proposé un dispositif photonique de transmission de signaux radiofréquence comprenant une pluralité de N entrées et au moins une sortie, chaque entrée étant apte à recevoir un signal radiofréquence d'entrée parmi N signaux radiofréquence d'entrée, les N signaux radiofréquence d'entrée provenant d'au moins une source de signal radiofréquence. Le dispositif photonique comprend :

- un générateur de signaux optiques configuré pour générer N signaux optiques,
- un ensemble de N modulateurs optiques de phase, chaque modulateur optique étant apte à moduler en phase un des signaux optiques générés à partir d'un des signaux radiofréquences d'entrée reçus, chaque modulateur optique de phase étant adapté pour délivrer en sortie un signal optique modulé en phase,- un démodulateur adapté pour générer au moins un signal optique démodulé en phase à partir d'au moins un des signaux optiques modulés délivrés en sortie des N modulateurs optiques de phase, et
- au moins un convertisseur adapté pour convertir le au moins un signal optique démodulé en phase en au moins un signal de sortie défini dans le domaine radiofréquence, le au moins un signal de sortie étant transmis à au moins une unité de réception, et portant des informations utiles issues d'au moins un des N signaux radiofréquence d'entrée.

Dans des modes de réalisation, le démodulateur peut comprendre un ou plusieurs entrelaceurs optiques à réponses périodiques, symétriques ou asymétriques.

Selon certains modes de réalisation, le démodulateur peut comprendre un commutateur à décalage en longueur d'onde.

Le démodulateur peut comprendre au moins un filtre de rejet de bande latérale.

Avantageusement, le dispositif photonique peut comprendre une boucle de correction implémentée entre le démodulateur et le générateur de signaux optiques, pour ajuster la génération du au moins un signal optique démodulé en phase.

Le générateur de signaux optiques peut comprendre au moins une source laser, et la source laser peut être une source laser à ondes continues, une source laser accordable en longueur d'onde et/ou une source laser préalablement modulée par un signal radiofréquence OL.

Dans des modes de réalisation, le dispositif photonique peut comprendre en outre un module de traitement de signaux optiques adapté pour générer un signal optique à partir des N signaux optiques modulés délivrés en sortie des N modulateurs optiques de phase, et le démodulateur peut être adapté pour générer le ou les signaux optiques démodulés en phase à partir du signal optique généré par le module de traitement de signaux optiques.

Les modes de réalisation de l'invention fournissent en outre un système satellitaire de télécommunications comprenant une source de signal radiofréquence, une unité de réception et un dispositif photonique, la source de signal radiofréquence étant une antenne réseau active comprenant une pluralité d'éléments récepteurs adaptés pour générer une pluralité N de signaux radiofréquence d'entrée alimentant une pluralité N d'entrées du dispositif photonique, l'unité de réception étant un processeur apte à être alimenté par au moins un signal radiofréquence délivré en sortie par le dispositif photonique.

La présente invention propose de plus un système de test d'une charge utile d'un satellite de télécommunications, le système de test comprenant une chambre de vide thermique, un dispositif de test comprenant une unité de réception, le système de test comprenant en outre un dispositif photonique agencé entre la chambre de vide thermique et le dispositif de test, la chambre de vide thermique comprenant une source de signal radiofréquence constituant la charge utile et étant adaptée pour générer une pluralité N de signaux radiofréquence d'entrée alimentant N entrées du dispositif photonique, le générateur de signaux optiques étant agencé dans le dispositif de test, ou entre la chambre de vide thermique et le dispositif de test, les N modulateurs optiques de phase étant agencés dans la chambre de vide thermique, le démodulateur et le ou les convertisseur(s) étant agencés dans le dispositif de test. Il est en outre proposé un procédé de transmission de signaux radiofréquence de transmission en réponse à la réception d'une pluralité de N signal radiofréquence d'entrée, les N signaux radiofréquence d'entrée provenant d'au moins une source de signal radiofréquence. Le procédé comporte au moins les étapes suivantes :-générer N signaux optiques ;

- moduler en phase chaque signal optique généré à partir d'un des signaux radiofréquences d'entrée reçus, ce qui fournit N signaux optiques modulés - démoduler en phase au moins un des signaux optiques modulés, ce qui fournit au moins un signal optique démodulé en phase ;

- convertir le au moins un signal optique démodulé en phase en au moins un signal de sortie défini dans le domaine radiofréquence, en appliquant une conversion optique-électrique/radiofréquence, le au moins un signal de sortie portant des informations utiles issues d'au moins un des N signaux radiofréquence d'entrée.

Le dispositif selon les modes de réalisation de l'invention permet de transmettre et/ou de convertir en fréquence un ou de plusieurs signaux RF, de manière simultanée.

Un tel dispositif est particulièrement adapté aux bandes passantes RF compatibles avec les systèmes antennaires de télécommunication et les applications de type AIT, sans y être limité.

Un tel dispositif photonique permet en outre d'obtenir une solution peu consommatrice d'énergie, de poids réduit, avec une compacité et une fiabilité améliorées, particulièrement avantageuse dans le domaine spatial. De plus, ce dispositif bénéficie des avantages des technologies et liaisons optiques, notamment leur transparence aux fréquences RF, leur faible dépendance à la distance, leur compatibilité électromagnétique et leur immunité face aux perturbations électromagnétiques.

**Description des figures**

D'autres caractéristiques, détails et avantages de l'invention ressortiront à la lecture de la description faite en référence aux dessins annexés donnés à titre d'exemple.

[Fig.1] La figure 1 est un schéma représentant un dispositif photonique de transmission et/ou de conversion de signaux radiofréquence, selon des modes de réalisation de l'invention.

[Fig.2] La figure 2 est un schéma représentant un système antennaire en réception, selon des modes de réalisation de l'invention.

[Fig.3] La figure 3 est un schéma représentant un système de test, selon des modes de réalisation de l'invention.

[Fig.4] Les figures 4(a), 4(b) et 4(c) sont des schémas représentant un module de génération et de distribution d'une pluralité de signaux optiques, selon des modes de réalisation de l'invention.

[Fig.5] Les figures 5(a) et 5(b) sont des schémas représentant un module de démodulation de phase, selon des modes de réalisation de l'invention.

[Fig.6] La figure 6 est une représentation graphique de profils spectraux de différents types de module de démodulation de phase, selon des modes de réalisation de l'invention.

[Fig.7] La figure 7 est un est un organigramme représentant le procédé de transmission et/ou de conversion de signaux radiofréquence, selon des modes de réalisation de l'invention.

Des références identiques sont utilisées dans les figures pour désigner des éléments identiques ou analogues. Pour des raisons de clarté, les éléments représentés ne sont pas à l'échelle.

## Description détaillée

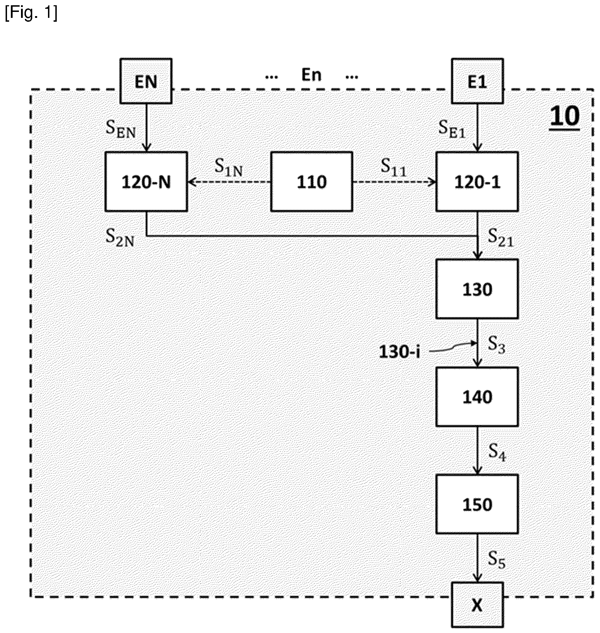

La figure 1 représente schématiquement un dispositif photonique de transmission et/ou de conversion de signaux radiofréquence (RF) 10 comprenant une architecture photonique configurée pour transmettre des signaux RF, selon des modes de réalisation de l'invention.

Tel qu'utilisée ici, une transmission de signaux radiofréquence via un dispositif photonique fait référence à un transfert (c'est-à-dire une transmission ou une conversion) d'informations utiles portées par un ou plusieurs signaux radiofréquence d'entrée du dispositif photonique 10 vers un ou plusieurs signaux de sortie du dispositif photonique 10, à partir d'une pluralité d'éléments optiques, photoniques et/ou électro-optiques configurés pour contrôler, transmettre et/ou convertir des signaux radiofréquence, photoniques et/ou électronique.

Le dispositif photonique de transmission et/ou de conversion de signaux RF 10 (encore appelé plus simplement 'dispositif photonique' dans la suite de la description) peut être utilisé notamment dans un domaine spatial.

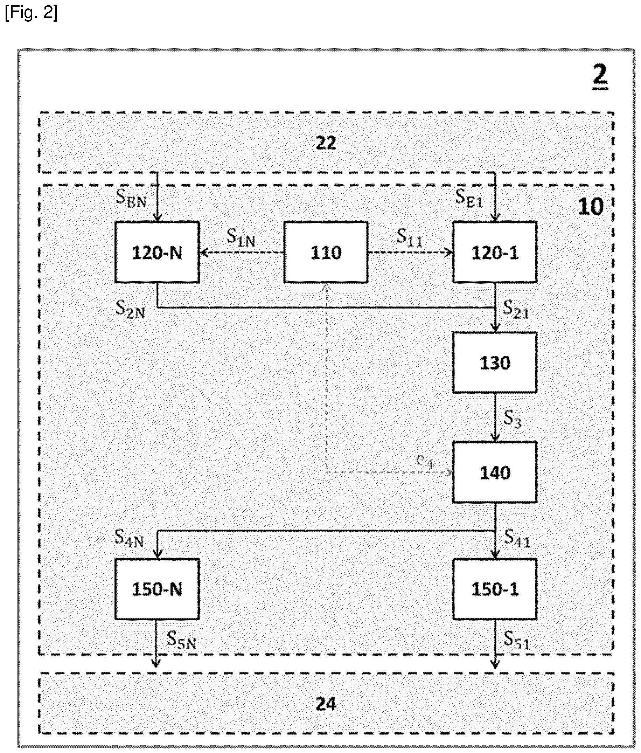

En particulier, le dispositif photonique 10 peut être utilisé dans un système antennaire 2 en réception tel que représenté sur la figure 2. Par exemple et sans limitation, dans une application de l'invention au domaine spatial, le système antennaire 2 peut être implémenté sous la forme d'une antenne active intégrée dans une charge utile et montée à bord d'un satellite destiné à fournir des services tels que des services de télécommunication. Le satellite peut être par exemple un satellite à haut débit ou à très haut débit, un satellite dit flexible équipé d'un processeur embarqué et/ou un satellite muni d'antennes multifaisceaux. Le dispositif photonique 10 peut alors être configuré pour transmettre et/ou pour convertir en fréquence des signaux RF issus d'un grand nombre d'éléments récepteurs d'une antenne réseau active vers un processeur de la charge utile. Un tel processeur peut être par exemple un processeur numérique ou un processeur analogique.

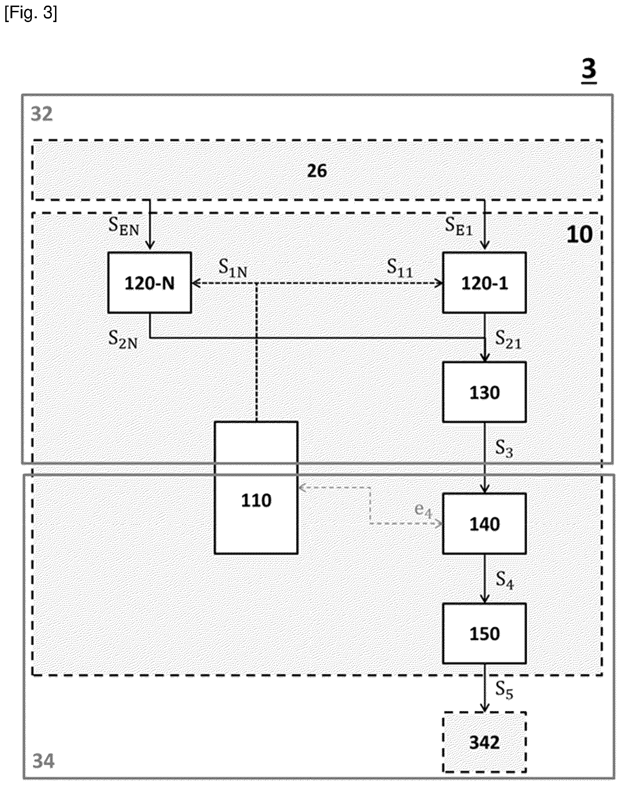

En outre, dans un exemple d'application de l'invention au domaine spatial, le dispositif photonique 10 peut être utilisé dans un système de test 3 tel que représenté sur la figure 3. Par exemple et sans limitation, le système de test 3 peut être utilisé au cours d'une procédure AIT effectuée au sol. Le dispositif photonique 10 peut alors être configuré pour transmettre et/ou pour convertir des signaux RF d'une charge utile d'un satellite à tester, placé dans une chambre à vide thermique, vers un équipement de mesure localisé dans un équipement EGSE (acronyme pour l'expression anglo-saxonne *Electrical Ground Support Equipment* signifiant 'Équipement de test électrique de segment sol'), placé à température ambiante et relativement distant.

En faisant référence de nouveau à la figure 1, le dispositif photonique 10 comprend une pluralité N d'entrées (E1, ..., EN) et au moins une sortie X. Chaque entrée En est apte à recevoir un signal radiofréquence d'entrée, noté $S_{En}$, « n » étant l'indice correspondant à la nième entrée En. L'indice 'n' est un entier compris entre 1 et N, et la valeur de N étant un entier supérieur ou égal à 2.

Les N signaux radiofréquence d'entrée $S_{En}$ peuvent provenir d'une unique source de signal radiofréquence ou de plusieurs sources de signal radiofréquence. Une source de signal radiofréquence peut par exemple être configurée pour émettre un signal RF dans des bandes fréquentielles radiofréquences spécifiques. Une bande fréquentielle à transmettre et/ou à convertir n'est pas limitée par la bande passante du dispositif photonique 10 si bien que toutes les bandes fréquentielles RF « Telecom » actuelles peuvent être couvertes, c'est à dire de la « bande L » à la « bande V » (i.e. les bandes actuelles comprises de 1 GHz à 50 GHz). Une bande fréquentielle à transmettre et/ou à convertir peut également correspondre à une bande fréquentielle RF supérieure à 50 GHz en fonction des différents composants électro-optiques constitutifs du dispositif photonique 10. Par exemple, les composants électro-optiques choisis pour implémenter le dispositif photonique 10 peuvent présenter de plus larges bandes passantes, allant par exemple et sans limitation jusqu'à 110 GHz.

Dans certains modes de réalisation, une source de signal radiofréquence peut comprendre un ou plusieurs éléments récepteurs d'une antenne réseau active 22, tel que représenté sur la figure 2. En variante, une source de signal radiofréquence peut correspondre à un ou plusieurs accès d'une charge utile d'un satellite 26 placé dans une chambre à vide thermique 32, tel que représentée sur la figure 3.

La sortie X du dispositif photonique 10 est apte à délivrer au moins un signal de sortie noté $S_5$ vers au moins une unité de réception adapté pour traiter le ou les signaux de sortie.

Dans certains modes de réalisation, la sortie X du dispositif photonique 10 peut être apte à délivrer N signaux de sortie $S_{5n}$ vers l'unité de réception, tel que représenté sur la figure 2. L'unité de réception peut être par exemple un processeur 24 (numérique ou analogique) compris dans la charge utile d'un système antennaire 2.

En variante, la sortie X du dispositif photonique 10 peut être apte à délivrer un unique signal de sortie $S_5$ vers l'unité de réception, tel que représenté sur la figure 3. L'unité de réception peut être par exemple un équipement de mesure 342 agencé dans un EGSE 34 placé à température ambiante dans un système de test 3.

Le dispositif photonique 10 comprend en outre un module 110 de génération et de distribution de signaux optiques, un ensemble de N modulateurs optiques de phase 120-n (ou 120-1, ..., 120-N), un module de démodulation de phase 140, et au moins un module de conversion optique-électrique/RF 150.

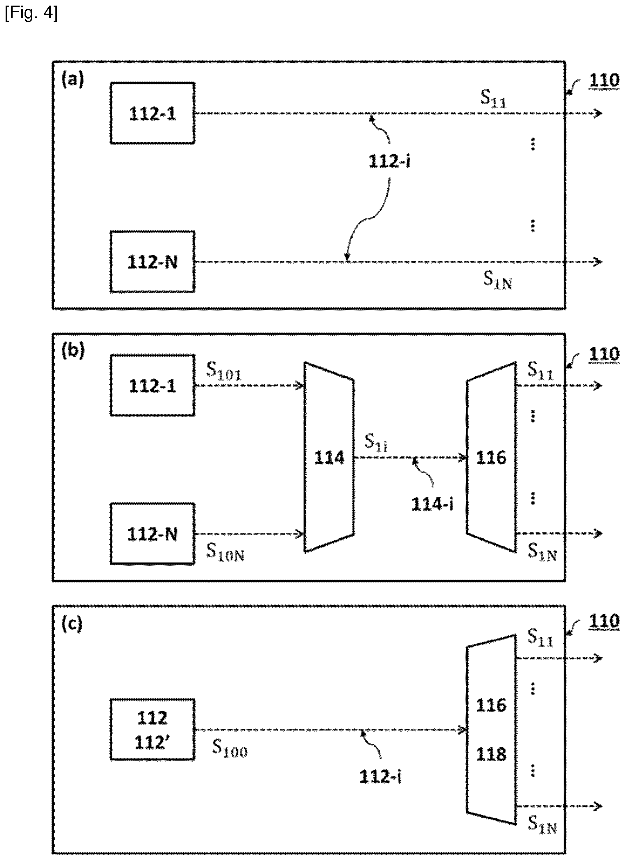

Les figures 4(a), 4(b) et 4(c) sont des schémas représentant un module 110 de génération et de distribution d'une pluralité de signaux optiques (encore appelé 'générateur de signaux optiques' ou plus simplement 'module 110' dans la suite de la description), selon des modes de réalisation de l'invention.

Le module 110 est configuré pour générer et pour distribuer une pluralité N de signaux optiques à distribuer, notés $S_{1n}$. Chaque signal optique à distribuer $S_{1n}$ est généré à partir d'une ou plusieurs sources d'ondes électromagnétiques optiques (encore appelé 'sources optiques'). Une onde électromagnétique d'un signal optique peut en outre être caractérisée par une longueur d'onde $\lambda$ donnée, une phase $\Phi$ donnée, une amplitude donnée et une polarisation donnée. Une source optique peut par exemple être configurée pour émettre un signal optique dans des bandes fréquentielles optiques spécifiques (c'est-à-dire des longueurs d'onde spécifiques). Une bande fréquentielle optique peut correspondre à une bande de télécommunication ITU (acronyme pour l'expression anglo-saxonne *International Telecommunication Union*) de longueur d'onde A , comprise typiquement entre 1530 nm et 1565 nm.

Dans certains des modes de réalisation, le générateur de signaux optiques 110 peut comprendre une pluralité N de sources laser (112-1, ..., 112-N), comme illustré sur les figures 4(a) ou 4(b). Chaque source laser 112-n peut être configurée pour générer un signal optique initial $S_{10n}$, de phase initiale $\Phi_n$ et de longueur d'onde initiale $\lambda_n$, les longueurs d'onde initiales $\lambda_n$ des signaux optiques initiaux $S_{10n}$ étant distinctes entre elles. Par exemple et sans limitation, une source laser 112-n peut être une source laser à ondes continues.

Dans des modes de réalisation, les signaux optiques initiaux $S_{10n}$ peuvent correspondre directement aux signaux optiques à distribuer $S_{1n}$ par le module 110, de phase initiale $\Phi_n$ et de longueur d'onde initiale $\lambda_n$ comme illustré sur la figure 4(a).

Dans des modes de réalisation, le module 110 peut comprendre en outre une unité 114 de multiplexage en longueur d'onde ou WDM (signifiant selon l'expression anglo-saxonnes *Wavelength Division Multiplexing*) adaptée pour générer un signal optique intermédiaire unique, noté $S_{1i}$, à partir de la pluralité de signaux optiques initiaux $S_{10n}$ délivrée en sortie de la pluralité N de sources lasers 112-n, comme illustré sur la figure 4(b). Le module 110 peut comprendre également une unité 116 de démultiplexage en longueur d'onde (ou WDM) adaptée pour reconstituer la pluralité de signaux optiques initiaux $S_{1n}$ à partir du signal optique intermédiaire $S_{1i}$. Dans ce cas, chaque signal optique initial $S_{10n}$ reconstitué peut correspondre à un signal optique $S_{1n}$ à distribuer par le module 110, de phase initiale $\Phi_n$ et de longueur d'onde initiale $\lambda_n$.

Selon certains des modes de réalisation, le module 110 peut comprendre une unique source optique, comme illustré sur la figure 4(c). Une telle unique source optique est configurée pour générer un signal optique primaire noté $S_{100}$ ayant une longueur d'onde primaire $\lambda_0$, une phase primaire $\Phi_0$ et une puissance primaire $P_0$.

Dans des modes de réalisation, la source optique unique du générateur de signaux optiques 110 peut être une source laser à ondes continues 112.

En variante, la source optique unique du module 110 peut être une source laser 112' préalablement modulée en amplitude et/ou en phase par un signal radiofréquence dit « oscillateur local » et noté communément OL. Dans ce cas, la source optique préalablement modulée 112' du module 110 peut être configurée pour contrôler (i.e. appliquer et/ou modifier) une modulation OL du signal optique primaire $S_{100}$ en réponse à un signal de commande généré par le module 110.

Avantageusement, la source optique unique 112 ou 112' peut être une source laser à longueur d'onde variable. Dans ce cas, la source optique unique 112 ou 112' peut être configurée pour contrôler (par exemple modifier) la longueur d'onde primaire $\lambda_0$ du signal optique primaire $S_{100}$ en réponse à un signal de commande de longueur d'onde généré par le module 110.

Dans les modes de réalisation où le module 110 comprend une source laser unique 112 ou 112', le module 110 peut comprendre un diviseur optique en puissance 118, tel qu'illustré sur la figure 4 (c). Un tel diviseur optique 118 peut être adapté pour générer la pluralité des N signaux optiques $S_{1n}$, distribués sur N voies optiques distinctes, à partir du signal optique primaire $S_{100}$. Les signaux optiques $S_{1n}$ à distribuer par le module 110 sont alors caractérisés par une puissance délivrée $P_n$ et une longueur d'onde unique $\lambda$ identique pour chacun des signaux optiques $S_{1n}$. En particulier, chaque puissance délivrée $P_n$ peut être définie en fonction de la puissance primaire $P_0$ du signal optique primaire $S_{100}$.

Par exemple et sans limitation, la puissance délivrée $P_n$ pour chaque voie optique peut être exprimée selon l'équation (01) suivante :

$$P_n = \frac{P_{10}}{N} \qquad (01)$$

Une puissance délivrée $P_n$ d'un signal optique $S_{1n}$ à distribuer peut aussi être égale à la puissance primaire $P_0$, tandis que les autres (N-1) signaux optiques à distribuer ont une puissance délivrée égale à zéro.

Avantageusement, les signaux optiques $S_{1n}$ à distribuer par le générateur de signaux optiques 110, qui comprend une source laser unique 112 ou 112', et un diviseur optique en puissance 118, peuvent alors être caractérisés par une longueur d'onde unique $\lambda$ identique pour chacun des signaux optiques $S_{1n}$.

Dans des modes de réalisation où l'unique source optique 112 ou 112' est une source laser à longueur d'onde variable, le module 110 peut comprendre une unité 116 de démultiplexage en longueur d'onde telle qu'illustrée sur la figure 4(c). Cette unité 116 peut être adaptée pour sélectionner au moins un signal optique, distribué sur une voie optique distincte, à partir du signal optique primaire $S_{100}$ et en fonction de la longueur d'onde

$\lambda_0$, pour former au moins un des N signaux optiques à distribuer $S_{1n}$ par le module 110, les longueurs d'onde $\lambda_n$ des signaux optiques initiaux $S_{1n}$ étant distinctes entre elles (la sélection peut consister par exemple à diriger, commuter ou aiguiller le signal optique).

Le module 110 peut être configuré pour contrôler l'unité de démultiplexage en longueur d'onde 116 ou le diviseur optique en puissance 118, en réponse à un premier signal de commande de voies optiques (ou canaux) généré par le dispositif photonique 10 et/ou par le générateur de signaux optiques 110.

Avantageusement, le module 110 peut comprendre un ou plusieurs moyens de transmission (112-i, 114-i) adaptés pour transmettre un signal optique. Par exemple et sans limitation, un moyen de transmission (112-i, 114-i) peut être une fibre à maintien de polarisation PMF (acronyme pour l'expression anglo-saxonne *Polarization Maintaining Fibre).* Une fibre PMF peut être implémentée dans le dispositif photonique 10 pour:

- distribuer le signal optique initial $S_{10n}$ de chaque source laser à ondes continues 112-n aux N modulateurs optiques de phase 120-n du dispositif photonique 10 ;
- transmettre le signal optique intermédiaire $S_{1i}$ de l'unité de multiplexage 114 vers l'unité de démultiplexage 116 ;
- transmettre le signal optique primaire $S_{100}$ d'une source optique 112 ou 112' unique vers l'unité de démultiplexage 116 ou le diviseur optique en puissance 118.

L'utilisation de fibres optiques PMF a l'avantage de réduire la complexité d'implémentation, d'augmenter la flexibilité mécanique et de minimiser la masse totale du dispositif photonique 10.

Dans des modes de réalisation où le dispositif photonique 10 est utilisé dans un système de test 3, la pluralité N de sources laser à ondes continues 112-n, l'unité 114 de multiplexage en longueur d'onde et/ou la source laser unique 112 ou 112' peuvent être agencées dans l'EGSE 34 à température ambiante. Dans de tels modes de réalisation, l'unité de démultiplexage en longueur d'onde 116 ou le diviseur optique en puissance 118 peut être placé dans la chambre à vide thermique 32, sensiblement à proximité de la sortie d'une charge utile 26 d'un satellite à tester.

Dans des modes de réalisation où le dispositif photonique 10 est utilisé dans un système antennaire 2, l'unité de démultiplexage 116 ou le diviseur optique en puissance 118 peut être agencé sensiblement à proximité de la sortie des éléments récepteurs de l'antenne réseau active 22.

Par ailleurs, chaque modulateur optique de phase 120-n du dispositif photonique 10 est apte à être alimenté d'une part par un des N signaux radiofréquence d'entrée $S_{En}$ et d'autre part par un des N signaux optiques $S_{1n}$ distribués par le module 110, et à délivrer en sortie un signal optique $S_{2n}$ modulé en phase.

En particulier, chaque modulateur optique de phase 120-n est configuré pour moduler ou convertir la phase (initiale $\Phi_{0n}$ ou primaire $\Phi_0$, modulée ou non) du signal optique $S_{1n}$ distribué à partir du signal radiofréquence d'entrée $S_{En}$ appliqué (c'est-à-dire, des informations utiles portées par le signal $S_{En}$) de manière à générer un autre signal optique ayant une phase $\Phi_{2n}$ modulée. Le signal optique $S_{2n}$ modulé en phase, issu du signal optique $S_{1n}$ distribué, peut ainsi être caractérisé par une longueur d'onde ($\lambda_0$ ou $\lambda_n$), une phase modulée $\Phi_{2n}$ et une puissance $P_{1n}$. La phase modulée $\Phi_{2n}$ étant définie en fonction de la phase du signal optique $S_{1n}$ distribué et du signal radiofréquence d'entrée $S_{En}$.

Avantageusement, dans le mode de réalisation où le module 110 comprend une ou plusieurs sources laser à ondes continues (112 ou 112-n), les modulateurs optiques de phase 120-n peuvent être des éléments photoniques agissant comme des convertisseurs électro-optiques, et permettant de transférer (c'est-à-dire générer une fonction de transfert) des signaux RF sur porteuse optique.

Alternativement, dans le mode de réalisation où le module 110 comprend une source laser 112' préalablement modulée par un signal radiofréquence OL, les modulateurs optique de phase 120-n peuvent être des éléments photoniques agissant comme mélangeur et/ou convertisseur photonique de fréquence RF, et permettant de générer une fonction de transfert de conversion de fréquence photonique des signaux RF.

Dans des modes de réalisation où le dispositif photonique 10 est utilisé dans un système de test 3, chaque modulateur optique de phase 120-n peut être placé dans la chambre à vide thermique 32, sensiblement à proximité de la sortie de la charge utile 26 d'un satellite à tester.

En outre, dans le cas d'un dispositif photonique 10 utilisé dans un système de test 3 et/ou dans un système antennaire 2, l'utilisation de l'ensemble des N modulateurs optiques de phase 120-n a l'avantage de ne pas requérir l'utilisation de cartes/circuits électroniques de contrôle de biais pour garantir les performances de la liaison complète du signal dans le système (3 et/ou 2).

Dans le cas où le dispositif photonique 10 est utilisé dans un système antennaire 2, l'utilisation de l'ensemble des N modulateurs optiques de phase 120-npermet de s'affranchir du besoin de cartes/circuits électroniques de contrôle de la tension de biais requis lorsqu'une solution à base de modulateurs électro-optiques d'amplitude est introduite. De ce fait, l'intégration mécanique au niveau des front-ends d'un système antennaire par exemple s'en retrouve simplifiée avec une empreinte volumique réduite et un gain de masse.

Comme représenté sur les figures 1, 2 et 3, le dispositif photonique 10 peut également comprendre un module de traitement de signaux optiques 130, selon des modes de réalisation de l'invention.

Le module de traitement de signaux optiques 130 du dispositif photonique 10 peut être adapté pour générer un signal optique $S_3$ défini à partir des N signaux optiques $S_{2n}$ modulés en phase et délivrés en sortie des N modulateurs optiques de phase 120-n. Le module de traitement de signaux optiques 130 (c'est-à-dire le module de multiplexage ou de sélection des signaux, correspondant à un module de combinaison de signaux, d'arrangement de signaux, ou encore de concentration de signaux, et appelé également 'module 130' par la suite) peut comprendre une pluralité N d'entrées et une sortie. Chaque sortie de modulateurs optiques de phase 120-n peut être connectée à une des N entrées du module 130.

Selon certains des modes de réalisation, un module 130 peut être une unité de multiplexage en longueur d'onde apte à générer un signal optique $S_3$ à partir de la pluralité de signaux optiques $S_{2n}$, modulés en phase en sortie de la pluralité des N modulateurs optiques de phase 120-n.

Selon d'autres modes de réalisation, un module 130 peut être une unité photonique apte à sélectionner au moins un signal optique parmi la pluralité de signaux optiques $S_{2n}$ modulés en phase (la sélection peut être effectuée par exemple en dirigeant, commutant ou aiguillant le signal optique).

Ainsi, le module 130 peut être configuré pour contrôler l'unité de multiplexage en longueur d'onde ou l'unité photonique de sélection, en réponse à un deuxième signal de commande de voies optiques généré par le dispositif photonique 10 et/ou par le module de traitement de signaux optiques 130. Dans de tels modes de réalisation, le deuxième signal de commande de voies optiques peut être défini en fonction du premier signal de commande de voies optiques généré par le dispositif photonique 10 et/ou le générateur de signaux optiques 110.

Ainsi, en fonction du mode de réalisation du module de traitement de signaux optiques 130, le signal optique $S_3$ en sortie du module 130 peut comprendre :

- un unique signal optique $S_{2n}$ modulé en phase, ou
- une pluralité de signaux optiques $S_{2n}$ modulés en phase, de longueur d'onde $\lambda_n$ distinctes.

Dans des modes de réalisation où le dispositif photonique 10 est utilisé dans un système de test 3, le module de traitement de signaux optiques 130 peut être placé dans la chambre à vide thermique 32, sensiblement à proximité de la sortie de la charge utile 26 d'un satellite à tester.

Avantageusement, le dispositif photonique 10 peut comprendre un moyen de transmission 130-i adapté pour transmettre un signal optique $S_3$ en sortie du module de traitement de signaux optiques 130 vers le démodulateur 140. Par exemple et sans limitation, ce moyen de transmission 130-i peut être une fibre optique monomode ou SMF (acronyme pour l'expression anglo-saxonne *Single Mode optical Fibre*). L'utilisation d'une fibre SMF a l'avantage de réduire la complexité d'implémentation et de minimisation de la masse totale du dispositif photonique 10.

Dans des modes de réalisation, le moyen de transmission 130-i peut être un ruban comprenant une pluralité de fibres optique SMF (ou *SMF ribbon* en anglais) configuré pour transporter indépendamment la pluralité de signaux optiques $S_{2n}$ au moyen d'un unique équipement optique. Dans ce cas, le module de traitement de signaux optiques 130 peut être une unité photonique apte à regrouper un ou plusieurs signaux de la pluralité de signaux optiques $S_{2n}$ modulés sur le moyen de transmission 130-i (i.e. correspondant à un signal optique $S_3$ équivalent).

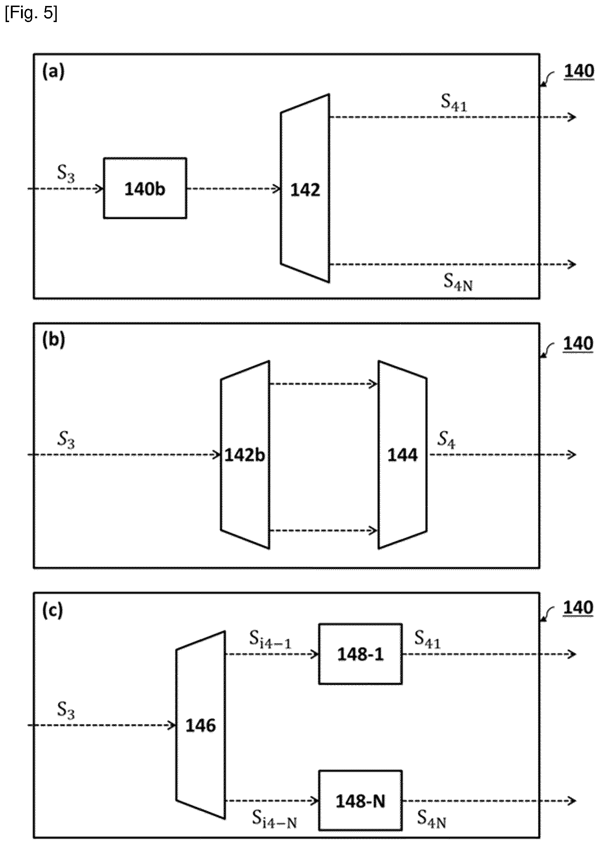

Les figures 5(a) et 5(b) sont des schémas représentant un module 140 de démodulation de phase (encore appelé 'module de démodulation phase/amplitude', 'filtre de démodulation phase/amplitude', ou plus simplement 'démodulateur' ou 'module 140' par la suite), selon des modes de réalisation de l'invention.

Le démodulateur 140 est adapté pour générer au moins un signal optique (noté $S_4$ ou $S_{4n}$) démodulé en phase à partir de la pluralité de signaux optiques $S_{2n}$ modulés en phase issus des N modulateurs optiques de phase 120-n. Le démodulateur 140 peut donc comprendre une pluralité N d'entrées, chaque entrée étant connectée à la sortie d'un des N modulateurs optiques de phase 120-n.

Ainsi, dans des modes de réalisation où le dispositif photonique 10 comprend un module de traitement de signaux optiques 130, le démodulateur 140 peut être adapté pour générer au moins un signal optique (noté $S_4$ ou $S_{4n}$) démodulé en phase à partir du signal optique $S_3$ issu du module de traitement de signaux optiques 130. Le démodulateur 140 peut dans ce cas comprendre une unique entrée connectée à la sortie du module de traitement de signaux optiques 130.

Le démodulateur 140 comprend en outre au moins une sortie. La ou les sorties du démodulateur 140 sont connectées au(x) module(s) de conversion optique-électrique/RF 150 ou 150-n.

Il est à noter qu'un spectre optique du signal optique $S_{2n}$ en sortie d'un modulateur optique de phase 120-n comprend une porteuse optique $S_{20n}$, entourée d'une première bande latérale de modulation $S_{21n}$ (encore appelée 'bande latérale de modulation inférieure') et d'une deuxième bande latérale de modulation $S_{22n}$ (encore appelée 'bande latérale de modulation supérieure'). Les deux bandes latérales $S_{21n}$ et $S_{22n}$ sont d'amplitude égale et se trouvent en opposition de phase.

En particulier, le démodulateur 140 peut être adapté pour atténuer significativement l'amplitude d'une des deux bandes latérales $S_{21n}$ ou $S_{22n}$ d'un signal optique $S_{2n}$ à traiter.

Tel qu'utilisée ici, l'expression « atténuer significativement » fait référence à une diminution notable de l'amplitude d'une des deux bandes latérales de modula-

tion $S_{21n}$ (ou $S_{22n}$) par rapport à l'autre bande latérale de modulation $S_{22n}$ (ou $S_{21n}$) de manière à éviter, en sortie du modulateur optique de phase 120-n, l'annulation des battements hétérodynes lorsque le signal optique $S_{2n}$ modulé en phase, qui présente deux bandes latérales de modulation d'amplitude $S_{21n}$ et $S_{22n}$, est détecté par un récepteur optique.

En l'absence d'un tel démodulateur 140, l'opposition de phase induit, en effet, sur un détecteur optique (ou récepteur optique, par exemple une photodiode) des battements hétérodynes, dus à la nature quadratique du détecteur, d'une part entre la porteuse optique $S_{20n}$ et la bande latérale de modulation inférieure $S_{21n}$, et d'autre part entre la porteuse optique $S_{20n}$ et la bande latérale de modulation supérieure $S_{22n}$ qui s'annulent entre eux, si bien qu'aucun signal RF ne peut être observé (ou déterminé ou évalué).

Dans certains modes de réalisation, le dispositif photonique 10 peut comprendre en outre un amplificateur optique (non représenté sur les figures). Par exemple et sans limitation, l'amplificateur optique peut être implémenté entre le module de traitement de signaux optiques 130 et le démodulateur phase/amplitude 140 de manière à compenser les pertes optiques pouvant éventuellement être générées dans le moyen de transmission 130-i. L'amplificateur optique peut également être implémenté de manière à compenser d'éventuelles pertes optiques générées par des opérations de connexions et de déconnexions en sortie de la chambre à vide thermique 32 dans le système de test 3. Un tel amplificateur optique permet notamment de maintenir la puissance optique reçue constante sur le(s) module(s) de conversion optique-électrique/RF 150 ou 150-n.

Dans des modes de réalisation où le dispositif photonique 10 est utilisé dans un système de test 3, l'amplificateur optique peut par exemple être localisé en entrée de l'EGSE 34, placé à température ambiante.

Dans certaines modes de réalisation où le module 110 est configuré pour générer des signaux optiques à distribuer $S_{1n}$ de longueurs d'onde $\lambda_n$ distinctes entre elles, le démodulateur 140 peut comprendre, ou être mis en oeuvre par, un ou plusieurs (par exemple, N) entrelaceurs optiques (encore appelés 'éléments optiques d'entrelacement' ou « *interleavers* » selon l'expression anglo-saxonne). Un entrelaceur (également appelé filtre passe-bande, et noté spécifiquement 140b sur la figure 5(a)) peut être défini selon des réponses périodiques, symétriques ou asymétriques. En outre, un filtre passe-bande périodique peut être caractérisé par une fréquence centrale $f_n$ ou f, utilisée pour filtrer un signal optique $S_{2n}$ modulé en phase issu d'un des N modulateurs optiques de phase 120-n ou le signal optique $S_3$ issu du module 130.

Par exemple, dans des modes de réalisation où le dispositif photonique 10 comprend un module de traitement de signaux optiques 130, le démodulateur 140 peut comprendre un unique entrelaceur optique. Alternativement, le démodulateur 140 peut comprendre une pluralité N d'entrelaceurs optiques, chacun agencé sur un chemin optique défini pour un des N signaux optiques $S_{2n}$ modulé en phase et délivré par un modulateur optique de phase 120-n.

Avantageusement, dans certains modes de réalisation où le dispositif photonique 10 comprend un module de traitement de signaux optiques 130, le démodulateur phase/amplitude 140 peut en outre comprendre une unité de démultiplexage en longueur d'onde (notée 142 sur la figure 5(a)) configurée pour générer un signal optique $S_4$ ou $S_{4n}$ issu d'un signal optique $S_3$ filtré par un entrelaceur optique. Une telle unité 142 de démultiplexage en longueur d'onde peut ainsi être agencée par exemple en sortie d'un filtre passe-bande périodique 140b et être adaptée pour sélectionner (par exemple diriger, commuter ou aiguiller) au moins un signal optique et le distribuer sur une voie optique distincte, en fonction de la longueur d'onde $\lambda_n$, pour former au moins un des N signaux optiques $S_{4n}$ démodulés en phase, comme illustré sur la figure 5(a).

Dans d'autres modes de réalisation où le module 110 est également configuré pour générer des signaux optiques à distribuer $S_{1n}$ de longueurs d'onde $\lambda_n$ distinctes entre elles, le démodulateur phase/amplitude 140 peut être mis en oeuvre par un commutateur WDM présentant un décalage en longueur d'onde adapté pour générer un signal optique $S_4$ ou $S_{4n}$ démodulé de phase après détection optique. Un commutateur WDM peut notamment comprendre une unité de démultiplexage en longueur d'onde qui est décalée en longueur d'onde et donc adaptée pour atténuer significativement l'amplitude d'une des deux bandes latérales $S_{21n}$ ou $S_{22n}$ des signaux optiques $S_{2n}$ à traiter (cette unité est désignée par la référence 142b sur la figure 5(b)). Avantageusement, un tel commutateur optique peut comprendre en outre une unité 144 de sélection en longueur d'onde, comme représenté sur la figure 5(b). L'unité 144 de sélection en longueur d'onde peut être agencée en sortie de l'unité 142b de démultiplexage en longueur d'onde avec décalage en longueur d'onde et être adaptée pour sélectionner (par exemple diriger, commuter ou aiguiller) au moins un signal optique, provenant d'une voie optique distincte, en fonction de la longueur d'onde $\lambda_n$, pour former un signal optique $S_4$ démodulé en phase, comme illustré sur la figure 5(b).

Dans des modes de réalisation où le module 110 est configuré pour générer des signaux optiques à distribuer $S_{1n}$ caractérisés par une longueur d'onde unique $\lambda$ identique, le démodulateur 140 peut comprendre un ou plusieurs filtres de rejet de bande latérale 148 ou 148-n, traitant chacun un signal optique parmi les N signaux optiques $S_{2n}$ modulés en phase issus d'un des N modulateurs optiques de phase 120-n. Par exemple et sans limitation, un tel filtre de rejet peut être un filtre FBG (acronyme pour l'expression anglo-saxonne *Fiber Bragg Grating*) ou un filtre appelé « Add/Drop WDM ». Un filtre de rejet de bande latérale 148 ou 148-n peut être caractérisé par une fréquence centrale $f_n$ utilisée pour filtrer le

signal optique $S_{2n}$ modulé en phase.

Avantageusement, dans des modes de réalisation où le dispositif photonique 10 comprend un module de traitement de signaux optiques 130, le démodulateur 140 peut comprendre également une unité 146 de sélection de signaux optiques configurée pour commuter le signal optique $S_3$ (comprenant un ou plusieurs signaux parmi les N signaux optiques $S_{2n}$ modulés en phase) issu du module de traitement de signaux optiques 130 vers une voie optique distincte sur laquelle se propage un signal optique intermédiaire $S_{i4-n}$ (la commutation du signal $S_3$ peut être effectuée par exemple en le dirigeant, en le sélectionnant ou en l'aiguillant). Le ou les filtres de rejet de bande latérale 148 ou 148-n peuvent alors être localisé(s) sur une voie optique distincte en sortie de l'unité 146 de sélection, par exemple, tel que représenté sur la figure 5(c).

Dans des modes de réalisation, le module 140 peut être configuré pour contrôler le ou les entrelaceurs optiques 140b, l'unité 142 de démultiplexage en longueur d'onde, l'unité 142b de démultiplexage en longueur d'onde avec décalage en longueur d'onde, et/ou l'unité 144 de sélection en longueur d'onde de signaux optiques en fonction de la longueur d'onde $\lambda_n$ des signaux optiques $S_{2n}$ modulés en phase. Le module 140 peut en outre être configuré pour contrôler ces éléments optiques en réponse à un troisième signal de commande de voies optiques généré par le dispositif photonique 10 et/ou par le module 140. Alternativement, le module 140 peut être configuré pour contrôler l'unité 146 de sélection de signaux optiques, et/ou le ou les filtres de rejet de bande latérale 148 ou 148-n en réponse à un troisième signal de commande de voies optiques généré par le dispositif photonique 10 et/ou par le module 140.

Avantageusement, le troisième signal de commande de voies optiques utilisé dans le démodulateur 140 peut être défini en fonction du premier et/ou du deuxième signal de commande de voies optiques générés par le dispositif photonique 10 et/ou par le module 140 et/ par le module 110.

Avantageusement, le dispositif photonique 10 peut comprendre une boucle de correction (ou de rétroaction) implémentée entre le démodulateur 140 et le générateur de signaux optiques 110, comme représenté sur les figures 2 et 3. La boucle de correction peut être mise en oeuvre de manière à ajuster la génération du ou les signaux optiques ($S_4$, $S_{4n}$) démodulés en phase. En particulier, une telle boucle de correction peut être mise en oeuvre de manière à maintenir (c'est-à-dire ajuster) une bonne concordance entre les longueurs d'onde $\lambda_n$ des signaux optiques $S_{1n}$ distribués par le module 110 et la fréquence centrale $f_n$ du filtre (i.e. filtre passe-bande ou filtre de rejet de bande latérale tels que définis dans les différents modes de réalisation). Par exemple et sans limitation, la fréquence centrale $f_n$ d'un filtre du démodulateur 140 peut être définie en fonction du signal de commande de longueur d'onde $e_4$ généré par le module 110 pour contrôler la longueur d'onde du signal optique

primaire $S_{100}$. Cette boucle de correction permet notamment de compenser des variations de température ou d'éviter un vieillissement des éléments optiques du dispositif photonique 10.

Avantageusement, dans des modes de réalisation où le dispositif photonique 10 est utilisé dans un système de test 3, le démodulateur 140 peut être agencé dans l'EGSE 34 à température ambiante.

Dans des modes de réalisation, le ou les modules de conversion optique-électrique/RF 150 ou 150-n (appelé également par simplification 'convertisseur' ou 'module 150' par la suite) du dispositif photonique 10 sont adaptés pour générer au moins un signal de sortie (noté $S_5$ ou $S_{5n}$) à partir du ou des signaux optiques démodulés en phase $S_4$ ou $S_{4n}$. Un module 150 comprend une entrée connectée à la sortie d'un démodulateur 140 et une sortie. La sortie d'un convertisseur 150 est connectée à l'unité de réception (24 ou 342).

Avantageusement, un convertisseur 150 peut être un récepteur optique approprié configuré pour appliquer une fonction de translation d'un signal optique démodulé en phase $S_4$ ou $S_{4n}$ vers le domaine RF. Le signal de sortie (noté $S_5$ ou $S_{5n}$) peut être par exemple un signal électrique portant les informations utiles, comme par exemple les informations portées par un ou des signaux radiofréquence d'entrée.

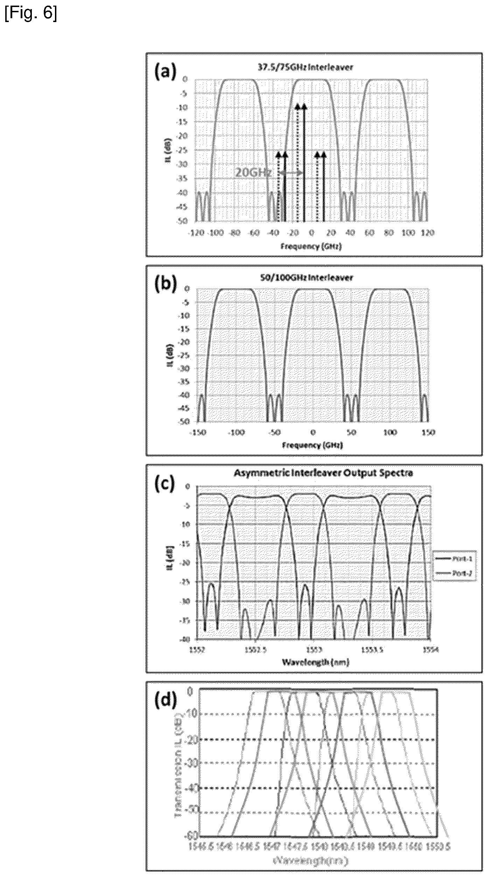

La figure 6 illustre des exemples de représentations graphiques de profils spectraux de différents types de démodulateur 140 considérés pour un dispositif photonique 10 utilisé dans un système antennaire 2 ou dans un système de test 3.

Le graphique (a) de la figure 6 représente un profil spectral d'un démodulateur 140 comprenant un démodulateur de phase/amplitude de type entrelaceur optique symétrique opérant à 37.5/75 GHz. Le graphique (b) de la figure 6 représente un profil spectral d'un démodulateur 140 comprenant un démodulateur de phase/amplitude de type entrelaceur optique symétrique opérant à 50/100 GHz. Le graphique (c) de la figure 6 représente un profil spectral d'un démodulateur 140 comprenant un démodulateur de phase/amplitude de type entrelaceur optique asymétrique. Le graphique (d) de la figure 6 représente un profil spectral d'un démodulateur 140 comprenant un démodulateur de phase/amplitude par commutation et décalage de longueur d'onde.

Il est à noter qu'un démodulateur de phase/amplitude de type entrelaceur optique symétrique à 37.5/75 GHz peut être compatible avec des traitements optiques de signaux RF dans la bande Ka à 20 GHz par exemple, avec une tolérance de 8 GHz. Dans ce cas, l'amplitude optique de la première bande latérale est rejetée de 15 dB par rapport à la deuxième bande latérale (graphique (a) de la figure 6), ce qui conduit à une rejection minimale de 30 dB dans le domaine RF. Un démodulateur de phase/amplitude de type entrelaceur optique symétrique à 50/100 GHz peut être compatible avec des traitements optiques de signaux RF pour la conversion en fréquence de signaux radiofréquences de la bande V vers la bande C et pour la transmission de signaux radiofréquences en bande Ka par exemple (bande Ka Rx à 30 GHz, avec une tolérance de 10 GHz).

Les modes de réalisation de l'invention permettent ainsi d'ajuster le spectre optique de sorte que les raies spectrales, qui participent au battement hétérodyne permettant de générer le signal radiofréquence de sortie d'intérêt, soient sélectionnées dans la bande passante du filtre (i.e. filtre passe-bande ou filtre de rejet de bande latérale tels que définis précédemment dans les différents modes de réalisation du module 140), et que les autres composantes spectrales soient rejetées le plus loin possible.

Un démodulateur de phase/amplitude par commutation et décalage de longueur d'onde peut être compatible avec les conversions de fréquence de signaux RF de la bande V vers la bande C et de la bande Ka vers la bande C.

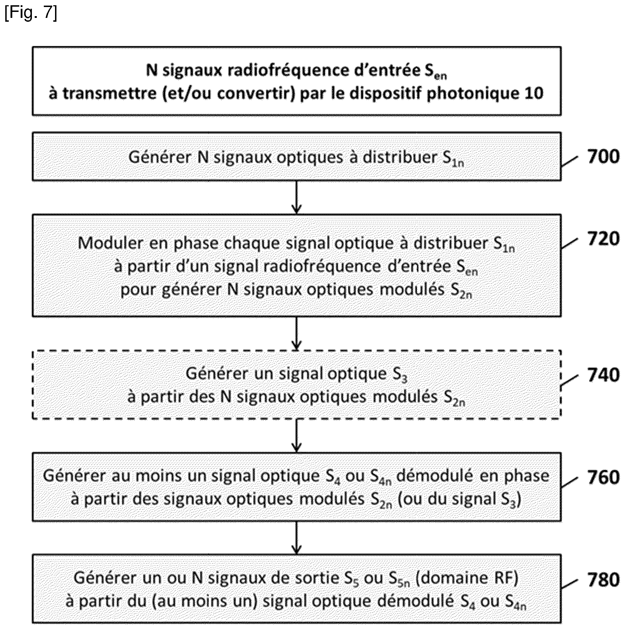

La figure 7 est un organigramme représentant le procédé de transmission et/ou de conversion de N signaux radiofréquences d'entrée $S_{En}$ mis en oeuvre par le dispositif de photonique 10, selon des modes de réalisation de l'invention.

A l'étape 700, une pluralité de N signaux optiques à distribuer $S_{1n}$ est générée par le module 110.

A l'étape 720, chaque signal optique à distribuer $S_{1n}$ est modulé en phase à partir d'un signal radiofréquence d'entrée $S_{En}$ de manière à générer N signaux optiques modulés $S_{2n}$ par chacun des N modules 120-n.

A l'étape 760, au moins un signal optique $S_4$ (ou $S_{4n}$) démodulé en phase est généré par le module 140 à partir des N signaux optiques modulés $S_{2n}$.

A l'étape 780, au moins un signal de sortie $S_5$ (ou $S_{5n}$) défini dans le domaine RF est généré par conversion optique-électrique/RF via le ou les convertisseurs 150 ou 150-n à partir de chaque signal optique démodulé $S_4$ (ou $S_{4n}$).

Le procédé de transmission peut également comprendre une étape 740 consistant à générer (ou sélectionner) un signal optique $S_3$ par le module 130 à partir des N signaux optiques modulés $S_{2n}$. Dans ce cas, à l'étape 760, au moins un signal optique $S_4$ (ou $S_{4n}$) démodulé en phase est généré par le module 140 à partir du signal optique $S_3$).

L'homme du métier comprendra que le dispositif photonique 10, selon les modes de réalisation de l'invention, peut être mis en oeuvre de diverses manières par matériel (« hardware »), ou une combinaison de matériel et de logiciels, notamment sous la forme de code de programme pouvant être distribué sous la forme d'un produit de programme, sous diverses formes. Le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

L'invention n'est pas limitée aux modes de réalisation décrits ci-avant à titre d'exemple non limitatif. Elle englobe toutes les variantes de réalisation qui pourront être envisagées par l'homme du métier. En particulier, l'homme du métier comprendra que l'invention n'est pas limitée aux différentes modules et unités du dispositif de photonique décrits à titre d'exemples non limitatif.

**Revendications**

1. Dispositif photonique (10) de transmission de signaux radiofréquence comprenant une pluralité de N entrées (En) et au moins une sortie (X), chaque entrée (En) étant apte à recevoir un signal radiofréquence d'entrée ($S_{En}$) parmi N signaux radiofréquence d'entrée ($S_{En}$), les N signaux radiofréquence d'entrée provenant d'au moins une source de signal radiofréquence, **caractérisé en ce que** ledit dispositif photonique (10) comprend :

   - un générateur de signaux optiques (110) configuré pour générer N signaux optiques ($S_{1n}$),
   - un ensemble de N modulateurs optiques de phase (120-n), chaque modulateur optique (120-n) étant apte à moduler en phase (720) un desdits signaux optiques générés ($S_{1n}$) à partir d'un desdits signaux radiofréquences d'entrée reçus ($S_{En}$), chaque modulateur optique de phase (120-n) étant adapté pour délivrer en sortie un signal optique ($S_{2n}$) modulé en phase, le spectre optique dudit signal optique ($S_{2n}$) modulé en phase comprenant une porteuse optique entourée d'une première bande latérale de modulation ($S_{21n}$) et d'une deuxième bande latérale de modulation ($S_{22n}$), lesdites bandes latérales ($S_{21n}$) et ($S_{22n}$) étant d'amplitude égale et se trouvant en opposition de phase.
   - un démodulateur (140) adapté pour atténuer l'amplitude d'une desdites bandes latérales ($S_{21n}$) ou ($S_{22n}$) d'au moins un desdits signaux optiques modulés ($S_{2n}$) délivrés en sortie des N modulateurs optiques de phase (120-n) pour générer au moins un signal optique ($S_4$, $S_{4n}$) démodulé en phase, et
   - au moins un convertisseur (150) adapté pour convertir ledit au moins un signal optique démodulé en phase ($S_4$, $S_{4n}$) en au moins un signal de sortie ($S_5$, $S_{5n}$) défini dans le domaine radiofréquence, ledit au moins un signal de sortie ($S_5$, $S_{5n}$) étant transmis à au moins une unité de réception, et portant des informations utiles issues d'au moins un desdits N signaux radiofréquence d'entrée ($S_{En}$).

**2.** Dispositif photonique (10), selon la revendication 1, dans lequel ledit démodulateur (140) comprend un ou plusieurs entrelaceurs optiques à réponses périodiques, symétriques ou asymétriques.

**3.** Dispositif photonique (10), selon l'une des revendications précédentes, dans lequel ledit démodulateur (140) comprend un commutateur à décalage en longueur d'onde.

**4.** Dispositif photonique, selon la revendication 1, dans lequel ledit démodulateur (140) comprend au moins un filtre de rejet de bande latérale (148 ou 148-n).

**5.** Dispositif photonique, selon l'une des revendications précédentes, dans lequel le dispositif photonique (10) comprend une boucle de correction implémentée entre ledit démodulateur (140) et ledit générateur de signaux optiques (110), pour ajuster la génération dudit au moins un signal optique ($S_4$, $S_{4n}$) démodulé en phase.

**6.** Dispositif photonique, selon l'une des revendications précédentes, dans lequel ledit générateur de signaux optiques (110) comprend au moins une source laser (112, 112' ou 112-n), et dans lequel ladite au moins une source laser (112, 112' ou 112-n) est une source laser à ondes continues, une source laser accordable en longueur d'onde et/ou une source laser préalablement modulée par un signal radiofréquence OL.

**7.** Dispositif photonique, selon l'une des revendications précédentes, dans lequel ledit dispositif photonique (10) comprend en outre un module (130) de traitement de signaux optiques adapté pour générer un signal optique ($S_3$) à partir des N signaux optiques modulés ($S_{2n}$) délivrés en sortie des N modulateurs optiques de phase (120-n), et dans lequel ledit démodulateur (140) est adapté pour générer ledit au moins un signal optique ($S_4$, $S_{4n}$) démodulé en phase à partir dudit signal optique ($S_3$) généré par le module de traitement de signaux optiques (130).

**8.** Système satellitaire de télécommunications (2) comprenant une source de signal radiofréquence, une unité de réception et un dispositif photonique (10) selon l'une des revendications 1 à 7, ladite source de signal radiofréquence étant une antenne réseau active (22) comprenant une pluralité d'éléments récepteurs adaptés pour générer une pluralité N de signaux radiofréquence d'entrée alimentant une pluralité N d'entrées (En) dudit dispositif photonique (10), ladite unité de réception étant un processeur (24) apte à être alimenté par au moins un signal radiofréquence ($S_5$, $S_{5n}$) délivré en sortie par ledit dispositif photonique (10).

**9.** Système de test (3) d'une charge utile (26) d'un satellite de télécommunications, ledit système de test (3) comprenant une chambre de vide thermique (32), un dispositif de test (34) comprenant une unité de réception (342), ledit système de test (3) comprenant en outre un dispositif photonique (10) selon l'une des revendications 1 à 7, agencé entre la chambre de vide thermique (32) et le dispositif de test (34), ladite chambre de vide thermique (32) comprenant une source de signal radiofréquence constituant ladite charge utile (26) et étant adaptée pour générer une pluralité N de signaux radiofréquence d'entrée alimentant N entrées (En) dudit dispositif photonique (10), le générateur de signaux optiques (110) étant agencé dans le dispositif de test (34), ou entre la chambre de vide thermique (32) et le dispositif de test (34), les N modulateurs optiques de phase (120-n) étant agencés dans ladite chambre de vide thermique (32), ledit démodulateur (140) et ledit au moins un convertisseur (150) étant agencés dans ledit dispositif de test (34).

**10.** Procédé de transmission de signaux radiofréquence de transmission en réponse à la réception d'une pluralité de N signal radiofréquence d'entrée ($S_{En}$), les N signaux radiofréquence d'entrée provenant d'au moins une source de signal radiofréquence, **caractérisé en ce que** le procédé comportant au moins les étapes suivantes :

- générer (700) N signaux optiques ($S_{1n}$) ;
- moduler en phase (720) chaque signal optique généré ($S_{1n}$) à partir d'un desdits signaux radiofréquences d'entrée ($S_{En}$) reçus, ce qui fournit N signaux optiques modulés ($S_{2n}$), chaque signal optique ($S_{2n}$) modulé en phase ayant un spectre optique comprenant une porteuse optique entourée d'une première bande latérale de modulation ($S_{21n}$) et d'une deuxième bande latérale de modulation ($S_{22n}$), lesdites bandes latérales ($S_{21n}$) et ($S_{22n}$) étant d'amplitude égale et se trouvant en opposition de phase ;
- démoduler en phase (760) au moins un desdits signaux optiques modulés ($S_{2n}$) en atténuant l'amplitude d'une desdites bandes latérales ($S_{21n}$) ou ($S_{22n}$), ce qui fournit au moins un signal optique ($S_4$, $S_{4n}$) démodulé en phase ;
- convertir (780) ledit au moins un signal optique démodulé en phase ($S_4$, $S_{4n}$) en au moins un signal de sortie ($S_5$, $S_{5n}$) défini dans le domaine radiofréquence, en appliquant une conversion optique-électrique/radiofréquence (780), ledit au moins un signal de sortie ($S_5$, $S_{5n}$) portant des informations utiles issues d'au moins un desdits N signaux radiofréquence d'entrée ($S_{En}$).

[Fig. 1]

[Fig. 2]

[Fig. 3]

**3**

[Fig. 4]

[Fig. 5]

[Fig. 6]

[Fig. 7]

| |
|---|
| **N signaux radiofréquence d'entrée $S_{en}$**<br>**à transmettre (et/ou convertir) par le dispositif photonique 10** |

Générer N signaux optiques à distribuer $S_{1n}$ — **700**

Moduler en phase chaque signal optique à distribuer $S_{1n}$<br>à partir d'un signal radiofréquence d'entrée $S_{en}$<br>pour générer N signaux optiques modulés $S_{2n}$ — **720**

Générer un signal optique $S_3$<br>à partir des N signaux optiques modulés $S_{2n}$ — **740**

Générer au moins un signal optique $S_4$ ou $S_{4n}$ démodulé en phase<br>à partir des signaux optiques modulés $S_{2n}$ (ou du signal $S_3$) — **760**

Générer un ou N signaux de sortie $S_5$ ou $S_{5n}$ (domaine RF)<br>à partir du (au moins un) signal optique démodulé $S_4$ ou $S_{4n}$ — **780**

Europäisches
Patentamt

European
Patent Office

Office européen
des brevets

# RAPPORT DE RECHERCHE EUROPEENNE

Numéro de la demande

EP 24 21 1618

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 9 800 346 B2 (PHASE SENSITIVE INNOVATIONS INC [US]) 24 octobre 2017 (2017-10-24) | 1-4,6-8, 10 | INV. H04B7/185 |
| A | * colonne 5, ligne 17 - colonne 8, ligne 19 * * figure 3 * | 5,9 | |
| X | US 2015/132005 A1 (KARRAS THOMAS W [US] ET AL) 14 mai 2015 (2015-05-14) | 1-8,10 | |
| A | * abrégé * * alinéa [0002] * * alinéas [0005] - [0007] * * alinéas [0033] - [0037] * * figure 2 * | 9 | |
| X | US 6 535 328 B2 (CALIFORNIA INST OF TECHN [US]) 18 mars 2003 (2003-03-18) | 1-4,6-8, 10 | |
| A | * colonne 1, ligne 20 - colonne 4, ligne 3 * * colonne 9, ligne 58 - colonne 14, ligne 51 * * figure 13B * | 5,9 | |

**DOMAINES TECHNIQUES RECHERCHES (IPC)**

H04B

Le présent rapport a été établi pour toutes les revendications

| Lieu de la recherche | Date d'achèvement de la recherche | Examinateur |
|---|---|---|
| Munich | 16 mars 2025 | Rolan Cisneros, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 21 1618

16-03-2025

| Document brevet cité au rapport de recherche | Date de publication | Membre(s) de la famille de brevet(s) | Date de publication |
|---|---|---|---|
| US 9800346 B2 | 24-10-2017 | CN 106471341 A | 01-03-2017 |
| | | EP 3164677 A1 | 10-05-2017 |
| | | JP 6177481 B1 | 09-08-2017 |
| | | JP 2017527233 A | 14-09-2017 |
| | | KR 20170058359 A | 26-05-2017 |
| | | US 2016006516 A1 | 07-01-2016 |
| | | US 2017085323 A1 | 23-03-2017 |
| | | US 2018062752 A1 | 01-03-2018 |
| | | US 2019115981 A1 | 18-04-2019 |
| | | US 2020145110 A1 | 07-05-2020 |
| | | US 2021281324 A1 | 09-09-2021 |
| | | US 2023109253 A1 | 06-04-2023 |
| | | US 2024333393 A1 | 03-10-2024 |
| | | WO 2016004421 A1 | 07-01-2016 |
| US 2015132005 A1 | 14-05-2015 | EP 3069411 A1 | 21-09-2016 |
| | | US 2015132005 A1 | 14-05-2015 |
| | | WO 2015073183 A1 | 21-05-2015 |
| US 6535328 B2 | 18-03-2003 | US 6178036 B1 | 23-01-2001 |
| | | US 2001030796 A1 | 18-10-2001 |

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2864385 A1